**Europäisches Patentamt**

**European Patent Office**

**Office européen des brevets**

(19)

(11) Veröffentlichungsnummer: **0 168 546**
**A1**

# EUROPÄISCHE PATENTANMELDUNG

(12)

(21) Anmeldenummer: **84890134.4**

(22) Anmeldetag: **16.07.84**

(51) Int. Cl.⁴: **B 23 Q 1/24**

(43) Veröffentlichungstag der Anmeldung: **22.01.86**
**Patentblatt 86/4**

(84) Benannte Vertragsstaaten: **AT DE FR GB IT**

(71) Anmelder: **GFM Gesellschaft für Fertigungstechnik und Maschinenbau Gesellschaft m.b.H., Ennserstrasse 14, A-4403 Steyr (AT)**

(72) Erfinder: **Marzy, Otto, Fichtenweg 6, A-4400 Steyr (AT)**
Erfinder: **Strasser, Johann, Kronstorf 135, A-4484 Kronstorf (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) **Lünette, insbesondere für Kurbelwellenfräsmaschinen od. dgl.**

(57) Eine Lünette (2) besitzt wenigstens zwei über einen Stelltrieb (8) voneinander lageunabhängig an ein zu spannendes Werkstück (W) ansetzbare und dann gemeinsam druckbeaufschlagbare Spannbacken (6, 7) sowie eine Klemmvorrichtung (15) zur Lagefixierung der Spannbacken (6, 7) im Lünettengestell (3).

Um ein exaktes Spannen des Werkstückes (W) unabhängig von der Form und Lage der Abstützstelle zu erreichen und ohne eine Lageveränderung des Werkstückes durch die Spannbacken (6, 7) befürchten zu müssen, sind die Spannbacken (6, 7) in parallelen Geradführungen (5) anschlagbegrenzt frei beweglich gelagert und stützen sich durch den sie koppelnden Stelltrieb (8) aneinander ab.

Lünette, insbesondere für Kurbelwellenfräsmaschinen od. dgl.

Die Erfindung betrifft eine Lünette, insbesondere für Kurbelwellenfräsmaschinen od. dgl., mit
wenigstens zwei über einen Stelltrieb voneinander
lageunabhängig an ein zu spannendes Werkstück ansetzbaren und dann gemeinsam druckbeaufschlagbaren
Spannbacken sowie einer Klemmvorrichtung zur Lagefixierung der Spannbacken im Lünettengestell.
Solche Lünetten mit nicht zentrierenden Spannbacken sind erforderlich, um Werkstücke an unbearbeiteten oder außermittig liegenden Querschnitten
abstützen zu können, wobei die Klemmvorrichtung
die Spannbacken auch unter Schnittkraftbelastung
in der nach der Druckbeaufschlagung vorhandenen
Position halten und eine lagestabile Werkstückabstützung gewährleisten soll. Bei den bekannten
Lünetten gibt es nun für jede Spannbacke einen
eigenen Hydrauliktrieb, aber **eine** gemeinsame Druck-

- 2 -

mittelversorgung für diese Hydrauliktriebe, so daß bei Druckbeaufschlagung die Spannbacken voneinander unabhängig vorwärts bewegt werden, bis sie am Werkstück anliegen, und erst nach Anlage aller Backen am Werkstück der Druckaufbau in allen Hydrauliktrieben zum Aufbringen der gewünschten Spannkraft erfolgen kann. Allerdings spielen hier die Reibungskräfte in den einzelnen Hydrauliktrieben eine beträchtliche Rolle und erlauben es nicht, ein biegeweicheres Werkstück wie eine Kurbelwelle exakt in der vorhandenen Lage zu spannen. Beim Ansetzen der voreilenden Spannbacke, die ja zuerst alleine das Werkstück belastet, wird die Werkstücklage etwas verändert, bis die Spannbacke tatsächlich zum Stillstand gekommen ist. Wegen der entsprechend größeren Reibkraft der Ruhe im stillstehenden Hydrauliktrieb kann diese Lageveränderung des Werkstückes durch das Ansetzen der übrigen Spannbacken und die anschließende gemeinsame Druckbeaufschlagung dann nicht mehr zurückgenommen werden, und das Werkstück wird in dieser veränderten Lage gespannt. Ein weiterer Nachteil der bekannten Lünetten mit nicht zentrierenden Spannbacken liegt darin, daß eventuell auftretende Abplattungen der Werkstückoberfläche durch den Ansatz der Spannbacken nicht ausgeglichen werden können, so daß die Kraftschlüssigkeit der Werkstückabstützung verlorengeht und auch dadurch die Gefahr von Werkstückverlagerungen besteht.

Der Erfindung liegt daher die Aufgabe zugrunde, diese Mängel zu beseitigen und eine Lünette der

0168546

- 3 -

eingangs geschilderten Art zu schaffen, die
bei vergleichsweise einfacher und kompakter
Konstruktion das exakte Spannen eines Werkstückes
unabhängig von der Form und Lage der Abstützstelle
erlaubt, ohne Lageveränderungen des Werkstückes
durch die Spannbacken befürchten zu müssen, und
die Möglichkeit einer den Kraftschluß zwischen
Spannbacken und Werkstück gewährleistenden, abplattungsbedingten Nachstellung der Spannbacken
bietet.

Die Erfindung löst diese Aufgabe dadurch, daß
die Spannbacken in parallelen Geradführungen anschlagbegrenzt frei beweglich gelagert sind und sich
durch den sie koppelnden Stelltrieb aneinander abstützen. Durch die schwimmende Anordnung der Spannbacken und den gemeinsamen, direkt zwischen den
gegenläufigen Spannbacken zwischengeschalteten
Stelltrieb bleibt die Stellbewegung des Stelltriebes so lange erhalten, bis alle Spannbacken am
Werkstück anliegen, und von der Antriebsseite her werden Unterschiede in den Reibkräften
zwischen Ruhe und Bewegung vermieden. Außerdem wird
durch das schwimmende System der Spannbacken die
Werkstückbelastung beim Auftreffen der voreilenden
Spannbacke sehr gering gehalten, so daß es von vornherein kaum zu einer Lageveränderung des Werkstückes kommt. Sollte dennoch eine solche Lageveränderung auftreten, wird auf Grund der gleichen Reibungsverhältnisse im Stelltrieb für alle Spannbacken bei Anlage der nachlaufenden Spannbacken diese
Lageveränderung wieder beseitigt und dann das Werkstück in seiner ursprünglichen Position fixiert.

- 4 -

Es sind zwei gegenläufige Spannbacken mit zueinander parallelen Spannflächen zur Aufnahme des Werkstückes möglich, in vorteilhafter Weise aber auch drei Spannbacken, wenn erfindungsgemäß zwei dieser Spannbacken über eine Wippe am Stelltrieb angelenkt sind. Die Wippe bringt einen Ausgleich des daran angreifenden Spannbackenpaares mit sich und erlaubt dessen gemeinsamen Anschluß an der zugeordneten Stelltriebseite. Die dritte Spannbacke greift dabei an der anderen Stelltriebseite an, so daß die gewünschte Gegenläufigkeit der Spannbacken und das schwimmende Spannbackensystem als Ganzes erhalten bleibt. Sollten vier Spannbacken gewünscht sein, wäre es selbstverständlich auch möglich, statt der dritten Spannbacke ebenfalls über eine Wippe ein zweites Spannbackenpaar am gemeinsamen Stelltrieb anzuschließen.

Als Stelltrieb eignet sich praktisch jeder Antrieb, der nicht am Lünettengestell selbst abgestützt wird, sondern sich allein an den Spannbacken abstützen läßt, damit die freie Beweglichkeit der Spannbacken erhalten bleibt. Vorteilhafterweise dient aber als Stelltrieb ein kolbenseitig an dem oder den einen und zylinderseitig an dem oder den anderen Spannbacken angreifender Hydrauliktrieb, da mit einem Hydrauliktrieb ein geringer Aufwand verbunden ist und hohe Spannkräfte erreicht werden können. Auch bei Einsatz eines solchen Hydrauliktriebes sind unterschiedliche Reibungskräfte nicht zu befürchten, da die Relativbewegung zwischen Kolben und Zylinder durch das Aufsetzen eines Spannbackens noch nicht unterbrochen wird, sondern fort-

- 5 -

dauert, bis tatsächlich alle Spannbacken zur Anlage am Werkstück gekommen sind.

In einer vorteilhaften Weiterbildung der Erfindung sind die Spannbacken, von denen zumindest eine das Werkstück umgreift, aneinander längsgeführt, wobei die Spannbacken vorzugsweise mit einer v-förmigen Führungsnut einerseits und einem entsprechend keilförmigen Führungskamm anderseits ineinandergreifen. Sind drei Spannbacken vorhanden, umgreifen die zwei mit der Wippe verbundenen Spannbacken das Werkstück beidseitig und nehmen die dritte Spannbacke zwischen sich auf. Durch die gegenseitige Führung der Spannbacken und die im wesentlichen einseitige Anordnung der Spannbacken und des Stelltriebes wird eine kompakte, platzsparende Konstruktion erreicht, wobei der keilförmige Führungskamm nicht nur eine gute Gleitfläche für die aufgesetzte Führungsnut bildet, sondern darüber hinaus auch das Liegenbleiben von Spänen od. dgl. Verunreinigungen verhindert.

**Bilden** nach einer Ausgestaltung der Erfindung die beiden das Werkstück umgreifenden Spannbacken auf der der mittleren Spannbacke abgewandten Werkstückseite hakenförmig zusammenwirkende Führungsschienen, ist bei höheren Klemmkräften für ein sicheres Abfangen der nach außen gerichteten Kraftkomponenten gesorgt und es kommt zu einem problemlos aufzunehmenden, in sich geschlossenen Kraftfluß.

Um die Lagerreibungskräfte möglichst gering zu halten, können weiters die Spannbacken in den Geradführungen des Lünettengestells rollengelagert sein. Dabei ist es möglich, daß die Rollen in der der Klemmvorrichtung gegenüberliegenden Geradführung

- 6 -

gegen Federkraft nachgiebig eingesetzt sind und
die Geradführungen der Klemmvorrichtung zugeordnete Klemmflächen mit Bremsbelägen aufweisen.
Durch diese Rollen werden die Reibungskräfte
im Bereich der Spannbackenlagerung und deren
Unterschiede sehr gering gehalten, wobei trotz
der Rollenlagerung, bedingt durch die Nachgiebigkeit der Rollen, die Rollenabstützung durch die
Klemmvorrichtung aufgehoben und eine gut dosierbare, feste Klemmung der Spannbacken erreicht werden kann.

Gemäß einer Weiterbildung der Erfindung ist
die an die Größe der bei der Werkstückbearbeitung
auftretenden Schnittkraftbelastung angepaßte Klemmung der Spannbacken durch die Klemmvorrichtung
kleiner als die vom Stelltrieb aufbringbare Stellkraft. Durch dieses Abstimmen der Klemmverhältnisse
einerseits auf die Stützkräfte anderseits auf den
Stelltrieb, läßt sich auf einfache Weise ein ständiges Nachsetzen der Spannbacken bei eventuell
auftretenden Abplattungen erreichen, so daß die
Kraftschlüssigkeit zwischen Spannbacken und Werkstück sicher erhalten bleibt und dennoch

0168546

- 7 -

keinerlei Lageverlust des gespannten Werkstückes
zu befürchten ist.

In der Zeichnung ist der Erfindungsgegenstand
in einem Ausführungsbeispiel rein schematisch dargestellt, und zwar zeigen die

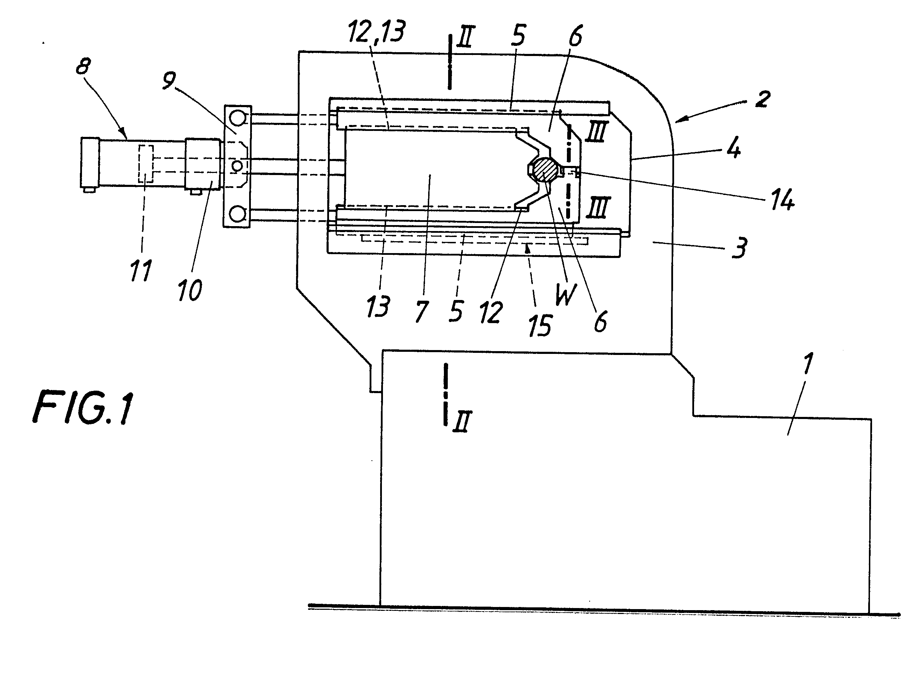

Fig. 1 eine erfindungsgemäße Lünette in Seitenansicht und die

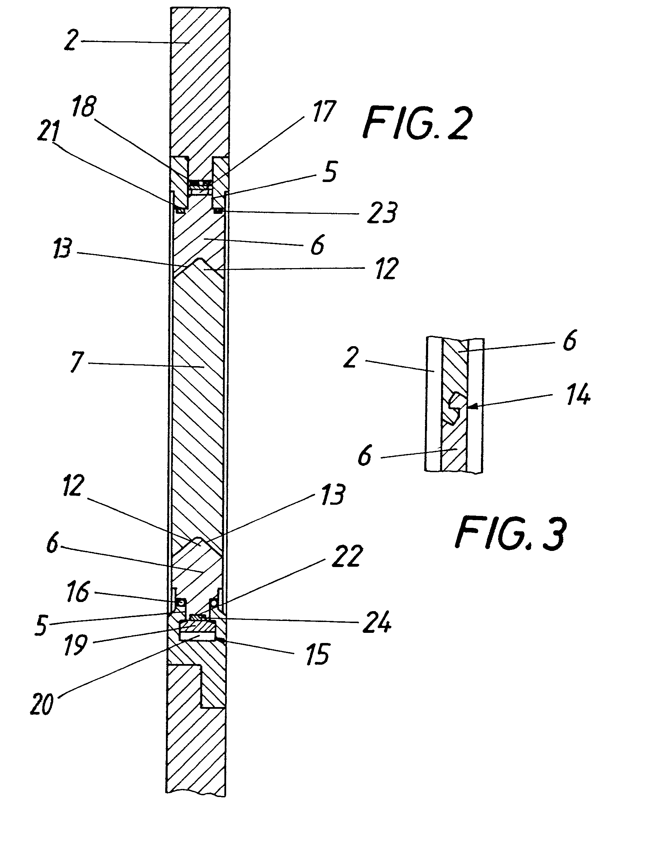

Fig. 2 und 3 Schnitte nach den Linien II-II bzw.
III-III der Fig. 1 größeren Maßstabes.

Auf einem nur angedeuteten Maschinenbett 1
einer nicht weiter dargestellten Kurbelwellenfräsmaschine od. dgl. ist zur Abstützung des zu bearbeitenden Werkstückes W eine Lünette 2 aufgebaut,
deren Gestell 3 eine Art Rahmenkulisse 4 mit Geradführungen 5 für das Werkstück W zwischen sich
spannende Spannbacken 6 und 7 bildet. Es sind drei
Spannbacken vorgesehen, die über einen gemeinsamen
Hydrauliktrieb 8 im Sinne eines gegenläufigen Antriebes aneinandergekoppelt sind und zusammen frei
beweglich in den Geradführungen 5 des Lünettengestells 3 sitzen. Die Rahmenkulisse 4 ergibt dabei
Grenzanschläge für die schwimmend gelagerten Spannbacken 6, 7, so daß ein Auseinanderfahren der
Spannbacken in einer genau definierten Offenstellung endet.

Von den drei Spannbacken 6, 7 sind zwei über
eine Wippe 9 am Zylindergehäuse 10 des Hydrauliktriebes 8 angelenkt, welche Spannbacken 6 als Paar
in den Geradführungen 5 sitzen und die dritte
direkt mit dem Kolben 11 des Hydrauliktriebes 8
verbundene Spannbacke 7 zwischen sich aufnehmen.
Zur gegenseitigen Längsführung der mittleren Spannbacke 7 und der äußeren Spannbacken 6 wirken je-

- 8 -

weils ein keilförmiger Führungskamm 12 der einen Spannbacke mit einer entsprechenden v-förmigen Führungsnut 13 der anderen Spannbacke zusammen. Außerdem umgreifen die beiden äußeren Spannbacken 6 das Werkstück W und sind auf der der mittleren Spannbacke 7 abgewandten Werkstückseite miteinander durch im Querschnitt hakenförmige Führungsschienen 14 verbunden, so daß zur Aufnahme der Spannkräfte ein in sich geschlossener Kraftfluß entsteht und nur die Abstützkräfte auf das Lünettengestell 3 übertragen werden müssen. Um diese von den Schnittkräften bei der Werkstückbearbeitung abhängigen Abstützkräfte in das Lünettengestell 3 einleiten zu können, ist eine Klemmvorrichtung 15 vorgesehen, die die Spannbacken 6, 7 gegenüber dem Lünettengestell 3 fixiert und ihre Beweglichkeit entlang der Geradführungen 5 verhindert.

Zur reibungsarmen Lagerung der Spannbacken 6 weisen die Geradführungen 5 Rollen 16, 17 auf, von denen die Rollen 17 für die obere Spannbacke 6 gegen die Kraft von Federn 18 nachgiebig abgestützt sind, damit bei Betätigung der Klemmvorrichtung 15 die Wirkung dieser Rollenlagerung ausgeschaltet werden kann. Die Klemmvorrichtung 15 besteht auf einfache Weise aus einem Klemmklotz 19, der über einen Hydraulikpolster 20 druckbeaufschlagbar und gegen die benachbarte Spannbacke 6 andrückbar ist. Dieser Druckbelastung geben die oberen Rollen 17 nach, so daß die von den Geradführungen 5 zusätzlich gebildeten Klemmflächen 21, 22 zur Wirkung kommen. Bremsbeläge 23, 24 erhöhen dabei den Klemmeffekt. Sobald der Hydraulik-

0168546

- 9 -

polster 20 entspannt ist, tragen wieder die
Rollen 16, 17 und die reibungsarme Bewegungsfreiheit der Spannbacken ist gegeben.

Auf Grund der schwimmenden Anordnung der
Spannbacken 6, 7 und deren gegenseitige Abstützung über den gemeinsamen Hydrauliktrieb 8
werden auch bei einem ungleichzeitigen Ansetzen
der Spannbacken 6, 7 am Werkstück W Lageänderungen
dieses Werkstückes vermieden, da es praktisch zu
keinen Unterschieden in den Reibungskräften beim
Ansetzen der Spannbacken kommt. Wir darüber hinaus
die Klemmung der Klemmvorrichtung 15 für die
Spannbacken 6, 7 so gewählt, daß die Schnittkräfte
durch die Werkstückbearbeitung aufgenommen werden
können, der Hydrauliktrieb 8 aber in der Lage ist,
diese Klemmung zu überwinden, lassen sich eventuell
auftretende Abplattungen an der Werkstückoberfläche
durch den Einsatz der Spannbacken ausgleichen und
trotz solcher Abplattungen für die Aufrechterhaltung des erforderlichen Kraftschlusses zwischen
Werkstück und Klemmbacken sorgen.

- 10 -

P a t e n t a n s p r ü c h e :

1.    Lünette, insbesondere für Kurbelwellenfräsmaschinen od. dgl., mit wenigstens zwei über
einen Stelltrieb (8) voneinander lageunabhängig
an ein zur spannendes Werkstück (W) ansetzbaren
und dann gemeinsam druckbeaufschlagbaren Spannbacken (6,7) sowie einer Klemmvorrichtung (15)
zur Lagefixierung der Spannbacken (6, 7) im Lünettengestell (3), dadurch gekennzeichnet, daß
die Spannbacken (6, 7) in parallelen Geradführungen (5) anschlagbegrenzt frei beweglich gelagert sind und sich durch den sie koppelnden
Stelltrieb (8) aneinander abstützen.

2.    Lünette nach Anspruch 1, mit drei Spannbacken
(6,7), dadurch gekennzeichnet, daß zwei der Spannbacken (6) über eine Wippe (9) am Stelltrieb (8)
angelenkt sind.

3.    Lünette nach Anspruch 1 oder 2, dadurch gekennzeichnet, daß als Stelltrieb ein kolbenseitig
an dem oder den einen und zylinderseitig an dem
oder den anderen Spannbacken (6, 7)angreifender
Hydrauliktrieb (8) dient.

4.    Lünette nach einem der Ansprüche 1 bis 3,
dadurch gekennzeichnet, daß die Spannbacken (6,7),
von denen zumindest eine (6) das Werkstück (W)
umgreift, aneinander längsgeführt sind,
wobei die Spannbacken (6,7) vorzugsweise mit
einer v-förmigen Führungsnut (13) einerseits
und einem entsprechend keilförmigen Führungskamm (12) anderseits ineinandergreifen.

5.   Lünette nach Anspruch 2 und 4, dadurch gekennzeichnet, daß die zwei mit der Wippe (9)
verbundenen Spannbacken (6) das Werkstück (W)
beidseitig umgreifen und die dritte Spannbacke
(7) zwischen sich aufnehmen.

6.   Lünette nach Anspruch 5, dadurch gekennzeichnet, daß die beiden das Werkstück (W) umgreifenden
Spannbacken (6) auf der der mittleren Spannbacke (7)
abgewandten Werkstückseite hakenförmig zusammenwirkende Führungsschienen (14) bilden.

7.   Lünette nach einem der Ansprüche 1 bis 6,
dadurch gekennzeichnet, daß die Spannbacken (6) in
den Geradführungen (5) des Lünettengestells (3)
rollengelagert sind.

8.   Lünette nach Anspruch 7, dadurch gekennzeichnet, daß die Rollen (17) in der der Klemmvorrichtung
(15) gegenüberliegenden Geradführung (5) gegen
Federkraft nachgiebig eingesetzt sind und die
Geradführungen (5) der Klemmvorrichtung (15)
zugeordnete Klemmflächen (21, 22) mit Bremsbelägen
(23, 24) aufweisen.

9.   Lünette nach einem der Ansprüche 1 bis 8,
dadurch gekennzeichnet, daß die an die Größe der
bei der Werkstückbearbeitung auftretenden Schnittkraftbelastung angepaßte Klemmung der Spannbacken
(6, 7) durch die Klemmvorrichtung (15) kleiner ist
als die vom Stelltrieb (8) aufbringbare Stellkraft.

0168546

*FIG.1*

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 018 115 (LOGAN) <br> * Spalte 3, Zeilen 17-62 * | 1 | B 23 Q 1/24 |
| Y | US-A-1 329 550 (SCHOLL) <br> * Seite 1, Zeilen 59-69 * | 1 | |
| X | EP-A-0 017 960 (HURTH) <br> * Anspruch 1 * | 8 | |
| A | US-A-1 954 920 (DAMERELL) <br> * Seite 2, Zeilen 65-112 * | 1 | |
| A | DE-A-2 658 970 (HELLER) | 1 | |
| A | AT-B- 351 890 (GFM) <br> * Anspruch 4 * | 8 | RECHERCHIERTE SACHGEBIETE (Int. Cl.4) |
| A | US-A-2 188 594 (GROENE) | 1 | B 23 Q 1/00 <br> B 23 C 3/00 |
| A | US-A-2 791 928 (SADDORIS) | 1 | |

Der vorliegende Recherchenbericht wurde für alle Patentansprüche erstellt.

| Recherchenort | Abschlußdatum der Recherche | Prüfer |
|---|---|---|
| DEN HAAG | 21-03-1985 | DE GUSSEM J.L. |